# EUROPEAN PATENT SPECIFICATION

(11) **EP 2 308 747 B1**
(45) Date of publication and mention of the grant of the patent: **26.06.2013**
(21) Application number: 10185716.7
(22) Date of filing: 01.10.2010
(51) Int. Cl.: B62K 11/14, B62D 51/00

(54) **Two-wheeled vehicle with a drive control apparatus**
Zweiradfahrzeug mit einer Steuereinrichtung
Véhicule à deux roues avec un appareil de commande

(30) Priority: 06.10.2009 IT RE20090096
(43) Date of publication of application: 13.04.2011
(73) Proprietor: Tecnomobility SRL, 58100 Grosseto (GR) (IT)
(72) Inventor: Tonani, Danilo, 58100, Grosseto (GR) (IT); Marinari, Daniele, 58100, Grosseto (GR) (IT)
(74) Representative: Corradini, Corrado

(56) References cited:
- US-A- 3 840 085
- US-A- 3 964 564
- US-B1- 6 234 495

## Description

This invention concerns two-wheeled vehicles, in particular an apparatus which enables a third party who is not the driver, for example an instructor, to assume complete control of the vehicle.

Learner drivers of motor vehicles need to learn how to control the vehicles and need to practise driving under conditions of absolute safety.

In four-wheeled vehicles such as motor cars, the solution consists of providing the vehicle with dual controls at the disposal at the same time of both the learner driver and the instructor. Dual controls of this type put the instructor in complete control of the vehicle and protect the learner driver from driving errors, which can have disastrous consequences.

All the motor cars used in driving schools are fitted with dual controls of this type.

The same has previously been difficult for two-wheeled vehicles, such as mopeds and motorcycles, and for vehicles exhibiting similar equilibrium characteristics.

In fact vehicles of this type do not provide sufficient space for a second passenger, generally positioned on a rear seat, or for dual controls.

By way of example, a motorbike fitted with dual controls is disclosed in the US patent No. US 3964564 defining the preamble of claim 1.

US patent No. US 6234495 discloses a stand-on sulky device to be attached to the rear of a self propelled power mower.

The aim of this invention is to make available a control apparatus for vehicles of this type which puts a control system of the vehicle at the disposal of an instructor, independently of the actions of the driver.

The aim of the invention is achieved by a two-wheeled vehicle exhibiting the characteristics delineated in the independent claim.

In the invention, an auxiliary frame is adopted, which is rigidly attached to the vehicle frame, and exhibits a part which embraces the rear wheel of the vehicle.

A platform is hinged to the part of the frame, which platform can oscillate at least on one or two axes, one of which is perpendicular to the axis of the vehicle and one of which is parallel to the axis of the vehicle.

The platform rests on the ground thanks to at least one, or preferably two castor wheel(s).

A rigid column rises from the auxiliary frame and is provided at the summit thereof with an auxiliary handlebar rigidly connected to the column.

The auxiliary handlebar comprises at least a lever which activates the clutch of the vehicle, and at least a lever which activates the brake, as well as a lever which activates the throttle; the lever which activates the throttle may be replaced by a usual grip such as is used on mopeds and motorcycles.

In a preferred embodiment, the auxiliary handlebar can rotate about a vertical central axis, in order to simulate the movements of the handlebar of the vehicle.

In this case a system of cables, suitably directed by idle pulleys, links the movements of the auxiliary handlebar of the apparatus to the movements of the handlebar of the vehicle.

In a further preferred embodiment the auxiliary frame can be provided with two side wheels, the distance from the ground of which is adjustable, and the function of which being to prevent the vehicle from overturning.

The auxiliary wheels are individually arranged at the end of oscillating frames at the sides of the auxiliary frame, the position of which can be adjusted manually, or via a suitable adaptor, the control means of which are also arranged on the auxiliary handlebar.

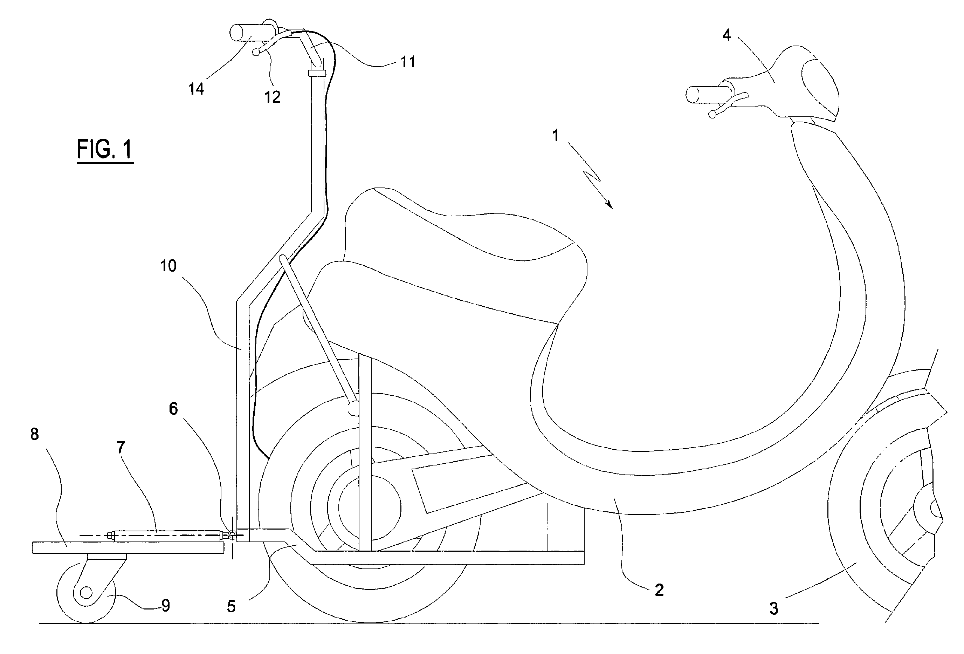

The advantageous functional and constructional characteristics of the invention will emerge from the following detailed description, which, with the aid of the appended figures of the drawings, illustrates some preferred embodiments thereof, provided by way of a non-limiting example
Figure 1 shows a side view of a first embodiment of the invention .

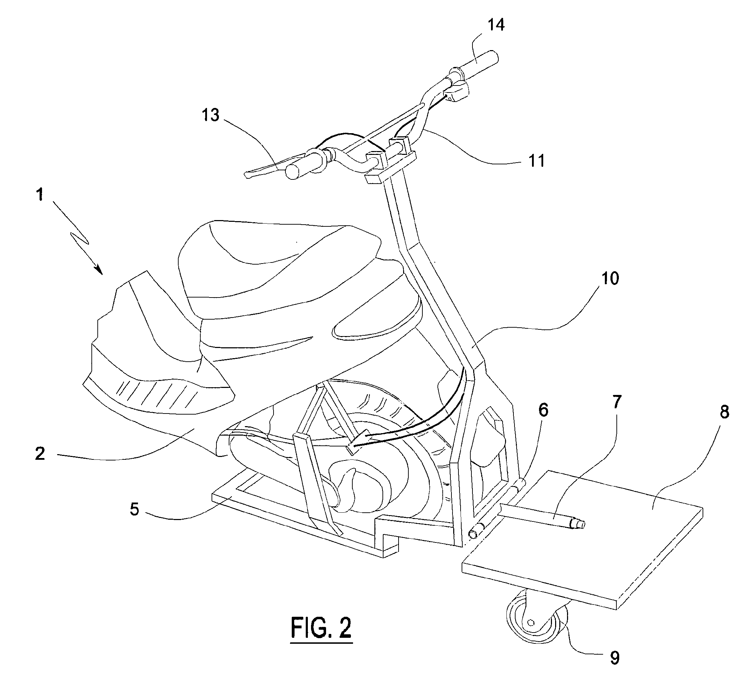

Figure 2 shows a perspective view of the invention.

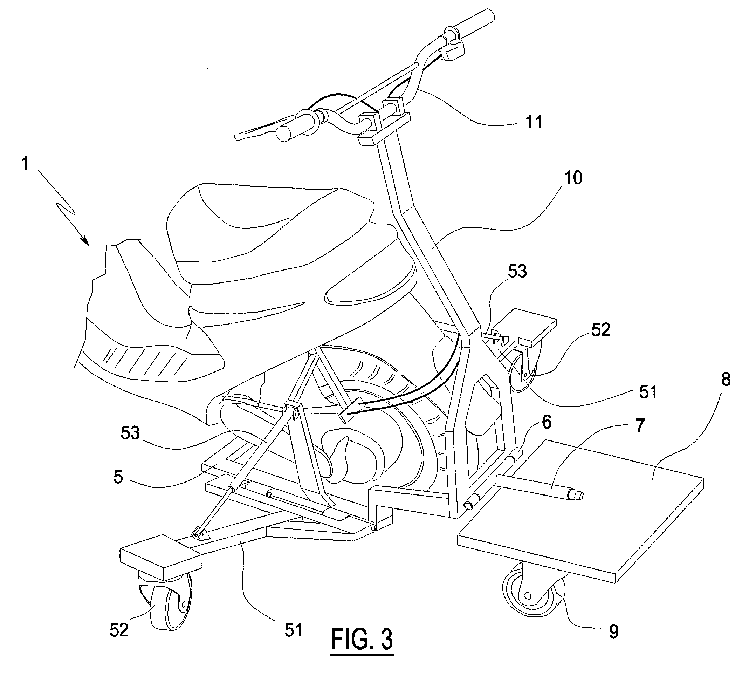

Figure 3 shows a perspective view of a further embodiment of the invention.
Figure 4 shows a perspective view of Fig.3 slightly modified.
Fig.5 shows a further preferred embodiment of the invention The figures1 to 4 show a normal two-wheeled motor vehicle 1 comprising a frame 2 provided with a front wheel 3 which is controlled by the handlebar 4.

An auxiliary frame 5 is attached to the frame 2, and is posteriorly provided with a pin 6 which is orthogonal to the direction of advancement of the vehicle.

A bar 7 is freely hinged to the pin 6 at the centre, to which bar 7 a platform 8 is in turn hinged along an axis which is orthogonal to the direction of advancement of the vehicle. The platform 8 rests on the ground by means of two castor wheels 9.

A column 10 rises from the auxiliary frame and is provided at the summit with an auxiliary handlebar 11 which comprises a brake lever 12, a clutch lever 13 and a rotatable throttle grip 14 which is connected to the normal control means of the vehicle.

In the simplest embodiment of the invention the handlebar 11 is rigidly attached to the column 10.

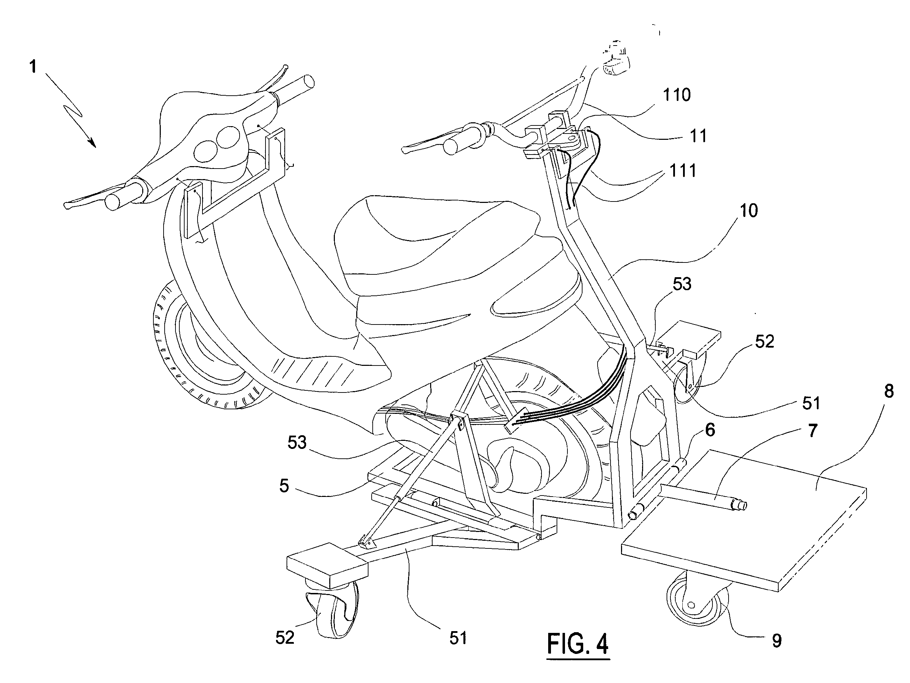

In the preferred embodiment shown in the drawings (figure 4), the auxiliary handlebar 11 is connected to the column 10 via a fifth wheel assembly 110 which allows the auxiliary handlebar 11 freedom of movement around an axis close to the vertical.

In this preferred embodiment, the rotations of the handlebar of the vehicle are linked to the rotations of the auxiliary handlebar via the sheathed cables 111. Further, two arms 51 can be hinged symmetrically to the sides of the auxiliary frame 5, small auxiliary wheels 52 being arranged at the end of the arms 51. The two arms 51 are connected to the auxiliary frame by two adjustable-length connecting rods 53 which can be two adjustable-length actuators.

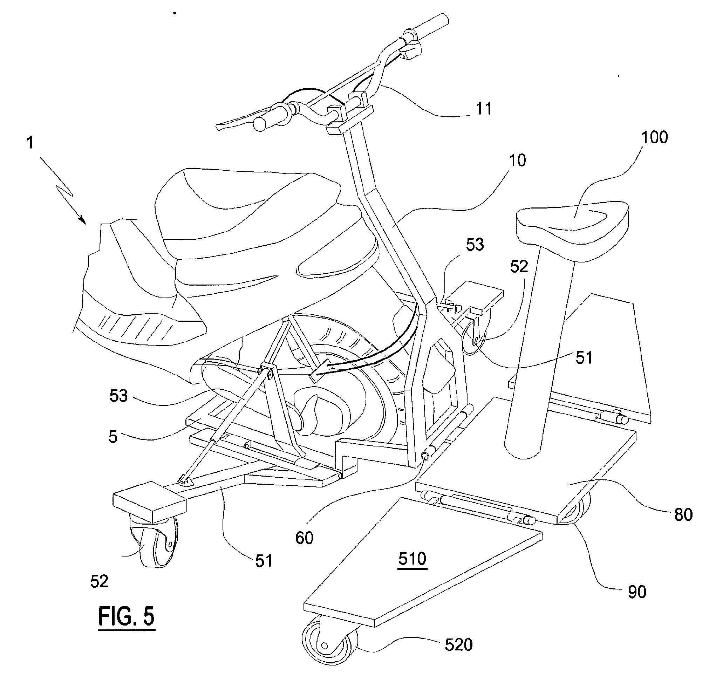

### A further embodiment of the invention is disclosed in Fig.5.

According to this embodiment the normal two-wheeled motor vehicle 1 comprises a frame 2 provided with a front wheel 3 which is controlled by the handlebar 4.

An auxiliary frame 5 is attached to the frame 2, and is posteriorly provided with a pin 60 which is orthogonal to the direction of advancement of the vehicle.

A platform 80 is freely hinged to the pin 60, and it rests on the ground by means of one castor wheel 90.

The column 10 rises from the auxiliary frame and is provided at the summit with an auxiliary handlebar 11 which comprises a brake lever 12, a clutch lever 13 and a rotatable throttle grip 14 which is connected to the normal control means of the vehicle.

Two arms 51 can be hinged symmetrically to the sides of the auxiliary frame 5, small auxiliary wheels 52 being arranged at the end of the arms 51.

The two arms 51 are connected to the auxiliary frame by two adjustable-length connecting rods 53 which can be two adjustable-length actuators.

At each side of the auxiliary frame 5 a footboard 510 is hinged on an axis parallel to the axis of the vehicle, and the footboard comprises auxiliary wheels 520.

Rear to the handlebar, the auxiliary frame 5 comprises a seat 100, in form of a saddle, for the instructor.

### The invention functions as follows.

After adjusting the side wheels 52 to the desired height, the driver takes his/her position on the vehicle and the instructor takes up his/her position on the oscillating rear platform of the apparatus.

By means of the grips located on the handlebar, and thanks to the column 10 and the relative handlebar 11, the instructor can intervene on the equilibrium and on the movement of the vehicle independently of the actions of the driver.

The invention is not limited to the embodiment shown and modifications and improvements can be introduced to the invention without its thereby forsaking the protective ambit of the claims herein below.

## Claims

1. A two-wheeled vehicle (1) comprising a frame (2), a handlebar (4), control means, and an apparatus for controlling advancement of the two-wheeled vehicle (1), **characterised in that** the apparatus comprises an auxiliary frame (5) which is rigidly constrained to the frame (2) of the vehicle (1) and is arranged behind the vehicle (1), the apparatus bearing a rear platform (8), which rests on the ground and is hinged to the auxiliary frame (5) about a horizontal axis that is perpendicular to the direction of advancement of the vehicle (1), and comprises a column (10) which rises rigidly from the auxiliary frame (5) and is provided with an auxiliary handlebar (11) which is similar to the handlebar (4) of the vehicle (1) and comprises same control means.

2. The vehicle (1) of claim 1 **characterised in that** the rear platform (8) is further hinged to the auxiliary frame (5) about a horizontal axis that is parallel to the direction of advancement of the vehicle (1).

3. The vehicle (1) of claim 1, **characterised in that** the auxiliary handlebar (11) is fixed to the column (10).

4. The vehicle (1) of claim 1, **characterised in that** the auxiliary handlebar (11) is hinged to the column (10) about a vertical central axis.

5. The vehicle (1) of claim 1, **characterised in that** the auxiliary handlebar (11) is connected to the handlebar of the vehicle by means of sheathed cables (111) which constrain rotations of the auxiliary handlebar (11) to rotations of the handlebar (4) of the vehicle (1).

6. The vehicle (1) of claim 1 **characterised in that** a seat or a saddle (100) is located on the platform (8).

7. The vehicle (1) of claim 1, **characterised in that** two oscillating arms (51) are arranged at sides of the auxiliary frame (5), which arms (51) are connected to the auxiliary frame (5) by means of respective length-adjustable connecting rods (53) in order to maintain the arms (51) at the desired inclination.

8. The vehicle (1) of claim 7, **characterised in that** the oscillating arms (51) are connected to the auxiliary frame (5) by means of linear actuators (53) which are controlled by an instructor.

## Patentansprüche

1. Zweiradfahrzeug (1), einen Rahmen (2), eine Lenkstange (4), Steuermittel und eine Vorrichtung zum Steuern der Fortbewegung des Zweiradfahrzeuges (1) umfassend, **dadurch gekennzeichnet, dass** die Vorrichtung einen Hilfsrahmen (5) umfasst, der starr an dem Rahmen (2) des Fahrzeugs (1) befestigt und hinter dem Fahrzeug (1) angeordnet ist, wobei die Vorrichtung eine hintere Plattform (8) trägt, die auf dem Boden ruht und um eine horizontale Achse, die rechtwinklig zur Fortbewegungsrichtung des Fahrzeugs (1) liegt, schwenkbar am Hilfsrahmen (5) angebracht ist, und eine Säule (10) umfasst, die starr vom Hilfsrahmen (5) aus aufstrebt und mit einer Hilfslenkstange (11) ausgestattet ist, die der Lenkstange (4) des Fahrzeugs (1) ähnlich ist und die gleichen Steuermittel umfasst.

2. Fahrzeug (1) nach Anspruch 1, **dadurch gekennzeichnet, dass** die hintere Plattform (8) ferner um eine horizontale Achse, die parallel zur Fortbewegungsrichtung des Fahrzeugs (1) liegt, schwenkbar am Hilfsrahmen (5) angebracht ist.

3. Fahrzeug (1) nach Anspruch 1, **dadurch gekennzeichnet, dass** die Hilfslenkstange (11) an der Säule (10) befestigt ist.

4. Fahrzeug (1) nach Anspruch 1, **dadurch gekennzeichnet, dass** die Hilfslenkstange (11) um eine vertikale Mittelachse schwenkbar an der Säule (10) angebracht ist.

5. Fahrzeug (1) nach Anspruch 1, **dadurch gekennzeichnet, dass** die Hilfslenkstange (11) mit Hilfe ummantelter Kabel (111), durch die Drehungen der Hilfslenkstange (11) Drehungen der Lenkstange (4) des Fahrzeugs (1) erzwingen, mit der Lenkstange (4) des Fahrzeugs (1) verbunden ist.

6. Fahrzeug (1) nach Anspruch 1, **dadurch gekennzeichnet, dass** auf der Plattform (8) ein Sitz oder Sattel (100) angeordnet ist.

7. Fahrzeug (1) nach Anspruch 1, **dadurch gekennzeichnet, dass** an Seiten des Hilfsrahmens (5) zwei Schwingarme (51) angeordnet sind, wobei die Arme (51) jeweils mit Hilfe längenverstellbarer Verbindungsstangen (53) mit dem Hilfsrahmen (5) verbunden sind, um die Arme (51) in der gewünschten Neigung zu halten.

8. Fahrzeug (1) nach Anspruch 7, **dadurch gekennzeichnet, dass** die Schwingarme (51) mit Hilfe von linearen Betätigungselementen (53) mit dem Hilfsrahmen (5) verbunden sind, die durch einen Ausbilder gesteuert werden.

## Revendications

1. Véhicule à deux roues (1) comprenant un châssis (2), un guidon (4), un moyen de commande et un appareil pour contrôler l'avancement du véhicule à deux roues (1), **caractérisé en ce que** l'appareil comprend un châssis auxiliaire (5) qui est contraint de manière rigide au châssis (2) du véhicule (1) et est agencé derrière le véhicule (1), l'appareil comportant une plate-forme arrière (8) qui est posée sur le sol et articulée au châssis auxiliaire (5) autour d'un axe horizontal perpendiculaire à la direction d'avancement du véhicule (1), et comprend une colonne (10) qui s'élève de manière rigide à partir du châssis auxiliaire (5) et qui comporte un guidon auxiliaire (11) similaire au guidon (4) du véhicule (1) et comprenant un moyen de commande identique.

2. Véhicule (1) selon la revendication 1, **caractérisé en ce que** la plate-forme arrière (8) est en outre articulée au châssis auxiliaire (5) autour d'un axe horizontal qui est parallèle à la direction d'avancement du véhicule (1).

3. Véhicule (1) selon la revendication 1, **caractérisé en ce que** le guidon auxiliaire (11) est fixé à la colonne (10).

4. Véhicule (1) selon la revendication 1, **caractérisé en ce que** le guidon auxiliaire (11) est articulé à la colonne (10) autour d'un axe central vertical.

5. Véhicule (1) selon la revendication 1, **caractérisé en ce que** le guidon auxiliaire (11) est connecté au guidon du véhicule au moyen de câbles gainés (111) qui contraignent les rotations du guidon auxiliaire (11) aux rotations du guidon (4) du véhicule (1).

6. Véhicule (1) selon la revendication 1, **caractérisé en ce qu'**un siège ou une selle (100) est agencé sur la plate-forme (8).

7. Véhicule (1) selon la revendication 1, **caractérisé en ce que** deux bras oscillants (51) sont agencés sur des côtés du châssis auxiliaire (5), lesdits bras (51) étant connectés au châssis auxiliaire (5) au moyen de barres de connexion (53) respectives à longueur réglable de manière à maintenir les bras (51) à l'inclinaison souhaitée.

8. Véhicule (1) selon la revendication 7, **caractérisé en ce que** les bras oscillants (51) sont connectés au châssis auxiliaire (5) à l'aide d'actionneurs linéaires (53) qui sont commandés par un instructeur.
